# EUROPEAN PATENT APPLICATION

(11) **EP 2 787 739 A1**
(43) Date of publication of application: **08.10.2014**
(21) Application number: 14163435.2
(22) Date of filing: 03.04.2014
(51) Int. Cl.: H04N 21/218, H04N 21/231, G06F 3/06

(54) **Media storage and management system**

(30) Priority: 05.04.2013 US 201361809008 P; 19.03.2014 US 201414219310
(71) Applicant: Front Porch Digital, Inc., Lafayette, CO 80026 (US)
(72) Inventor: Jackson, Phil, Lafayette, CO 80026 (US); Zummer, George, Lafayette, CO 80026 (US)
(74) Representative: Lloyd, Patrick Alexander Desmond

(57) **Abstract**

A media data storage system comprising a data management portion, a local data storage portion, and a remote data storage portion. One data management portion comprises instructions associated with an intake, modification, transfer, and providing of media information. The local data storage portion comprises one or more first media data tape libraries adapted to receive the media information. The remote data storage portion comprises one or more second media data tape libraries adapted to receive the media information. Furthermore, the data management portion is adapted to instruct the local data storage portion to remove at least a portion of the media information from the one or more first media tape libraries upon verifying that the remote data storage portion comprises the at least a portion of the media information.

## Description

### PRIORITY

This application claims priority to U.S. Provisional Application No. 61/809,008, filed April 5, 2013, entitled Media Storage and Management System, which is incorporated herein by reference.

### FIELD OF THE INVENTION

The present invention relates to media storage systems. In particular, but not by way of limitation, the present invention relates to using remotely-based videotape libraries to store and manage media content.

### BACKGROUND OF THE INVENTION

Media content provided from content providers must be reliable and available to the content provider customers. If the content is not reliable or available, the content provider may lose customers to competitors. Furthermore, the content provider must be able to provide the content under constantly changing and consolidating global organizational structures including outsourcing of various products and services and the need for on-demand scaling of content.

### SUMMARY OF THE INVENTION

In order to provide content providers and customers with a single integrated environment in which to manage media content assets in a constantly changing global environment, embodiments of the invention described herein were developed. Such embodiments provide the ability to quickly and efficiently manage the media assets from and to any location and any device, on an on-demand basis, limiting the need to invest in intensive capital infrastructure while scaling requirements up or down and billing only for the products and services used. Illustrative embodiments of the present invention that are shown in the drawings are summarized below. These and other embodiments are more fully described in the Detailed Description section. It is to be understood, however, that there is no intention to limit the invention to the forms described in this Summary of the Invention or in the Detailed Description. One skilled in the art can recognize that there are numerous modifications, equivalents, and alternative constructions that fall within the spirit and scope of the invention as expressed in the claims.

One embodiment of the invention comprises a media data storage system comprising a data management portion, a local data storage portion, and a remote data storage portion. The data management portion comprises instructions associated with an intake, modification, transfer, and providing of media information. The local data storage portion comprises one or more first media data tape libraries adapted to receive the media information. The remote data storage portion comprises one or more second media data tape libraries adapted to receive the media information. Furthermore, the data management portion is adapted to instruct the local data storage portion to remove at least a portion of the media information from the one or more first media tape libraries upon verifying that the remote data storage portion comprises the at least a portion of the media information.

Another embodiment of the invention comprises a method of managing media content. One such method comprises providing a media tape to a local data storage system. The media tape comprises media content. The method further comprises copying the media content to a remote data storage system, verifying the media content at the remote data storage system comprises the media content at the local data storage system, and deleting the media content at the local data storage system.

Yet another embodiment of the invention may be characterized as a non-transitory, tangible computer readable storage medium, encoded with processor readable instructions to perform a method of managing media content. One such method comprises providing a media tape to a local data storage system, wherein the media tape comprises media content. The method may further comprise sending the media content to a remote data storage system, verifying that the media content at the remote data storage system comprises the media content at the local data storage system, and removing the media content at the local data storage system.

Specifically, the invention is defined by the independent claims, to which reference should be made.

Preferably in the non-transitory tangible computer readable storage medium defined the method step of verifying that the media content at the remote data storage system comprises the media content at the local data storage system comprises, comparing a first file comprising checksum information to a second file comprising checksum information; and determining whether there are any differences between the first file and the second file.

Preferably the non-transitory tangible computer readable storage medium defined further comprises sending a request from a client device to receive the media content; receiving the request at a local data management system; forwarding the request to a remote data storage system, the remote data storage system comprising one or more media tape storage libraries; accessing the content on the one or more media tape storage libraries; and providing the media content to a client device from the on the one or more media tape storage libraries.

Preferably in the non-transitory tangible computer readable storage medium defined providing the media content to a client device from the on the one or more media tape storage libraries comprises, restoring the media content to a digital file; and sending the digital file to the client.

Preferably in the non-transitory tangible computer readable storage medium defined providing a media tape to a local data storage system comprises, providing a plurality of media tapes to a first local data storage system from a plurality of client locations.

Preferably in the non-transitory tangible computer readable storage medium defined further comprising managing the content between multiple remote data storage systems, wherein each of the multiple remote data storage system is located at a separate location.

### BRIEF DESCRIPTION ON THE DRAWINGS

Various objects and advantages and a more complete understanding of the present invention are apparent and more readily appreciated by reference to the following Detailed Description and to the appended claims when taken in conjunction with the accompanying Drawings, where like or similar elements are designated with identical reference numerals throughout the several views and wherein:
FIG. 1A depicts physical components of a first portion of a media storage and management system in an exemplary embodiment of the present invention;
FIG. 1B depicts physical components of a second portion of a media storage and management system in an exemplary embodiment of the present invention;
FIG 1C depicts physical components of a third portion of a media storage and management system in an exemplary embodiment of the present invention;
FIG. 2 depicts a flowchart comprising a method that may be carried out in connection with the embodiments described herein; and
FIG. 3 depicts and exemplary embodiment of a computing device that may be associated with the embodiments described herein.

### DETAILED DESCRIPTION

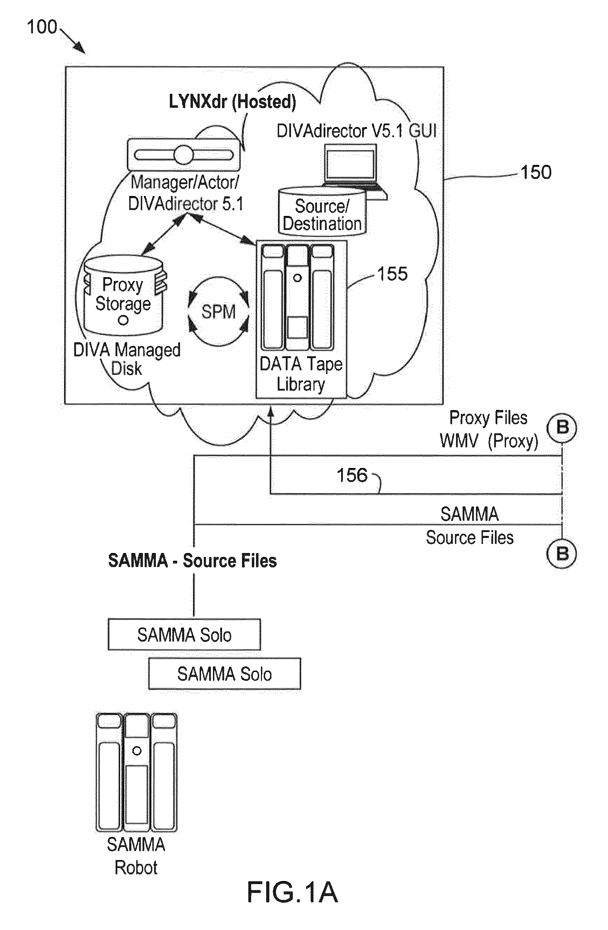

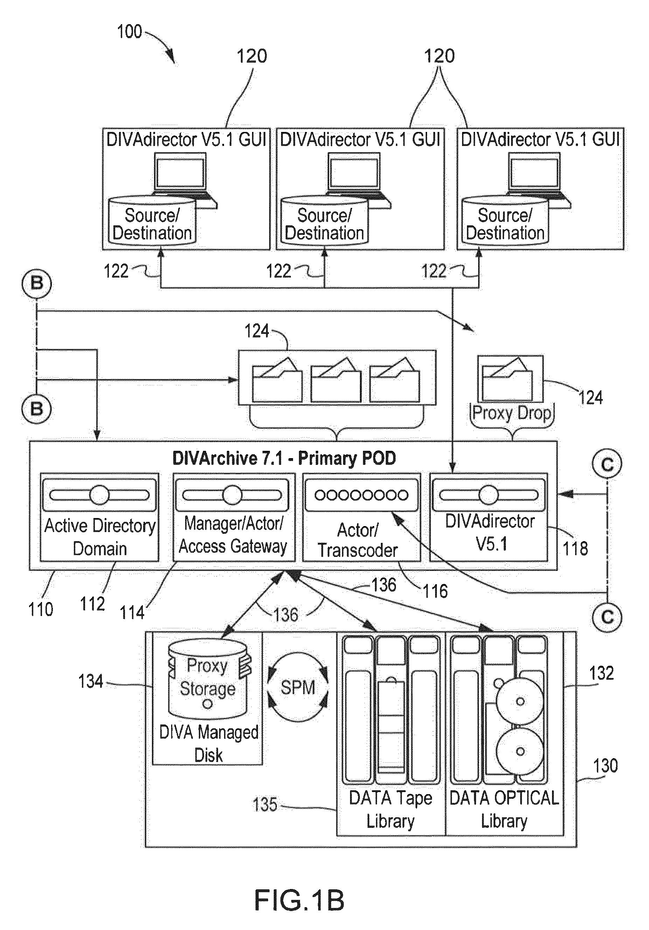

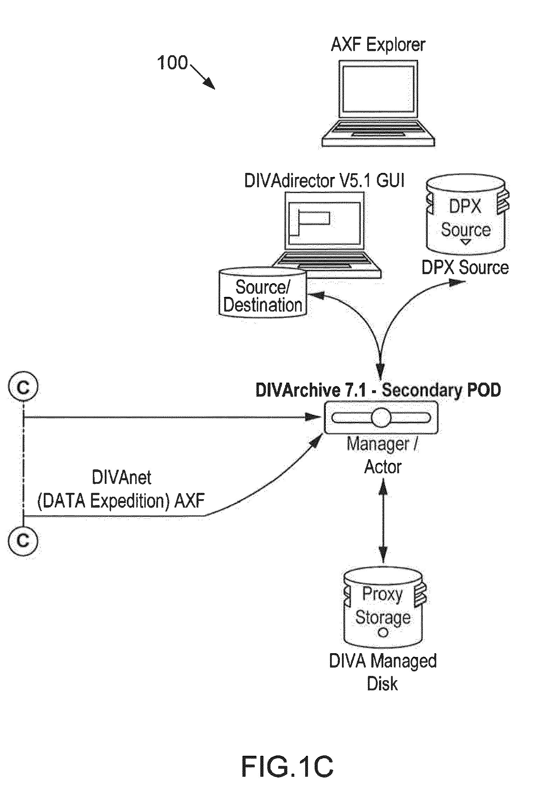

Turning first to FIGS. 1A-1C, seen is a media data storage system 100. FIG. 1A is communicatively coupled to FIG. 1B along line B-B while FIG. 1B is communicatively coupled to FIG. 1C along line C-C. As seen in FIG. 1B, one media data storage system 100 comprises a data management portion 110. One data management portion 110 may comprise a DIVArchive® system from Front Porch Digital located in Louisville, CO. The data management portion 110 may also extend through the C-C line to FIG. 1C, as seen by the DIVArchive® manager/actor, which may communicate to the DIVAdirector® and proxy storage systems seen in FIG. 1C. The DIVAdirector® system may comprise a system from Front Porch Digital located in Louisville, CO and may be similar to the client devices 120 seen in FIG. 1B. The Samma system seen in FIG. 1A may comprise a robotic storage library adapted to access various video and other media tape libraries upon request. The data management system 110 may be adapted to analyze, scale, store, manage, transcode, deliver and protect media assets across a network. For example, one or more portions of the data management system 110 may comprise an active directory domain 112, a gateway 114, a transcoder 116 and or/a media asset manager 118 such as, but not limited to, a DIVAdirector® system from Front Porch Digital located in Louisville, CO. One data management portion 110 comprises instructions stored on one or more memory devices 124 within the data management portion 110. Such instructions may be associated with the intake, modification, transfer, and providing of media information such as, but not limited to, the media assets received 122 from one or more client devices 120. Each of the one or more client devices 120 may also comprise a DIVAdirector® system from Front Porch Digital located in Louisville, CO. However, alternative client devices 120 such as, but not limited to, other video source devices, are contemplated. The providing of media information may comprise, for example, sending the media assets files from the data management portion 110 to a remote data storage portion 150, as described below.

The media data storage system 100 may further comprise a local data storage portion 130. One local data storage portion 130 may comprise one or more first media data tape libraries 135, one or more optical data libraries 132, and/or a digital proxy storage device 134. The one or more first media data tape libraries 135, one or more optical data libraries 132, and/or a digital proxy storage device 134 are adapted to receive 136 the media information. In one embodiment, the one or more first media data tape libraries 135, one or more optical data libraries 132, and/or a digital proxy storage device 134 may receive 136 the media information from the data management system 110. However, it is contemplated that the one or more first media data tape libraries 135, one or more optical data libraries 132, and/or a digital proxy storage device 134 may receive 136 the media information from another portion of the system 100. For example, the media assets may be received from the one or more client devices 120.

As seen in FIG. 1A, the media data storage system 100 may yet further comprise a remote data storage portion 150. One remote data storage portion 150 may be located in the cloud at a remote location from the data management portion 110 and/or the local data storage portion 130 and client devices 120. Furthermore, in one embodiment, the data management portion 110 and the local data storage portion 130 may be located at generally or substantially the same location. The remote data storage portion 150 may comprise one or more second media data tape libraries 155. The one or more second media data tape libraries 155 may be adapted to receive 156 the media information from the data management portion 110. For example, upon receiving a media asset which may comprise a digital media asset file received from the client 120 or may comprise a tape source provided through a local tap player or otherwise, the data management portion 110 may store the media file in the data tape library 135. This may occur through copying the received media asset to a tape and then storing the tape in the library 135.
Upon (a) storing the media asset in the local data storage portion 130, or (b) receiving the media asset, but prior to storing the asset in the local data storage portion 130, the data management portion 110 may determine that the asset should be stored at the remote data storage portion 150. For example, the media asset file may be identified as a media asset file unlikely to be frequently accessed and therefore the data management portion 110 may assign the media asset file for storage at the remote data storage portion 150. Other reasons why the media asset file may be stored at the remote data storage portion 150 are contemplated. In one embodiment, the data management portion 110 may then send the media asset to the remote data storage portion 150. The media asset file may comprise a digital file that may be physically sent through a digital network and/or a tape may be sent to the remote data storage portion 150. Upon receiving 156 the media asset, the media asset may be copied to a tape and/or stored in the one or more second media data tape libraries 155. It is also contemplated that the remote data storage portion 150 comprises storage devices other than the data tape libraries 155, such as, but not limited to, an optical library, digital storage device and/or any other type of storage device.

In one embodiment, upon receiving the media asset, a portion of the remote data storage portion 150 may determine, or the remote data storage portion 150 may be informed by the data management portion 110 to determine, whether the entire media asset was received. It is contemplated that in the specification, where the term "media asset" is used, the term may refer to one or more, or a plurality of media assets. Furthermore, the term "media asset" may also be referred to as "media content" or "content" or "media asset files." In one embodiment, determining whether the entire media asset was received at the remote data storage portion 150 may comprise using the remote data storage portion 150 to create a checksum file of the received media asset. This checksum file may comprise a first checksum file, may comprise a plurality of checksum files and may be compared to a received checksum file comprising a second checksum file and/or plurality of checksum files. For example, the data management portion 110 may provide the remote data storage portion 150 with the second checksum file when the media asset is provided to the remote data storage portion 150. Alternatively, the second checksum file may be provided in a separate communication. Upon comparing the first and second checksum files, the remote data storage portion 150 may determine whether the files match. If so, the remote data storage portion 150 may determine the entirety of the media asset file was received and may inform the data management portion 110 of the same. If the checksum files do not match, the remote data storage portion 150 may inform the data management portion 110 of such an outcome.

Upon checking and comparing the checksum files, if the checksum files match and the remote data storage portion 150 received the entirety of the media file, the data management portion 110 may delete or otherwise remove the media asset from the local data storage portion 130. If the checksum file comparison fails and the files do not march, then the data management portion 110 may resend the media asset to the remote data storage portion 150 and the checksum verification process described above may be repeated until the checksum files correlate and then the media asset may be removed from the local data storage portion 130.

Upon removing the media asset from the local data storage portion 130, in subsequent requests for the media asset from a client 120 to view, listen, modify or otherwise access at least a portion of the media file, the data management portion 110 may receive the request from the client, identify the request as a request for a media asset file located at the remote data storage portion 150, and forward the request to the remote data storage portion 150. The remote data storage portion 150 may then send the requested media asset to the data management portion 110 directly from the tape library 155 or other storage device, which may then send the media asset to the client 120 which submitted the request. Alternatively, the data management portion 110 may inform the remote data storage portion 150 to send the media asset and communicate directly to the client 120. Sending the media asset file between the client 120, data management portion 110, and the remote data storage portion 150 may comprise sending digital media asset file across a network.

It is further contemplated that the checksum file received 156 by the remote data storage portion 150 may comprise a first file comprising checksum information and the checksum file created by the remote data storage portion 150 may comprise a second file comprising checksum information, and these two fails may be compared. Furthermore, the first and/or second file may comprise an xml file and/or may be sent as a portion of, or within, an xml file or xml communication message.

The local data storage portion 130 may also comprise a plurality of one or more first media data tape libraries 135. Each of the plurality of one or more first media data tape libraries 135 may be located at separate locations. Also, when a client device requests 120 access to a media asset, such a request may comprise a request to access at least a portion of the media information (text, sound images, etc.) in the media asset. Furthermore, at least a portion of the media information may be sent to the client device 120 from one or more second media data tape libraries which may comprise a portion of the remote library 155. The local library 135 may comprise a first library. For example, a client 120 may request content which comprises a portion of a playlist at the client. At least a portion of the content may comprise media information which may be sent to the client from the one or more second media data tape libraries 155. Furthermore, in one embodiment, sending the media asset to the client may comprise substantially live streaming the at least a portion of the media information from the library 155 to the client 120.

It is further contemplated that the data management portion 110 may comprise a request manager, the request manager adapted to direct requests for the at least a portion of the media information to the remote data storage portion 150.

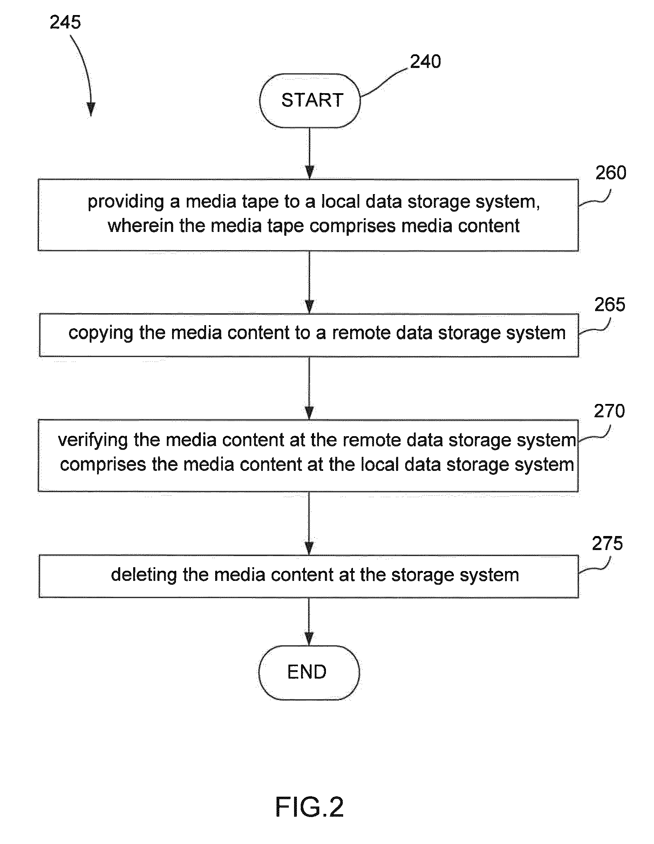

Turning now to FIG. 2, seen is a method 245 of managing media content. One such method starts at 240 and at 260 comprises providing a media content to a local data storage system. In one embodiment, the media content comprises a media tape. For example, as disclosed with reference to FIG. 1, step 260 may comprise providing a media asset comprising a media (video, audio, graphics, and/or additional data) tape to the local data storage portion 130. Such a tape may be sent from a client 120 or may be created at the data management portion 110 from a digital media asset file received from the client 120. Providing a media tape may also comprise creating a data tape from a digital file.

Returning now to FIG. 2, step 265 then comprises copying the media content in the received media asset to a remote data storage system. Copying the media content to a remote data storage system may comprise copying the media asset to the remote data storage portion 150 from the data management portion 110 as described above with reference to FIGS. 1A-1C.

Moving now to step 270 in FIG. 2, the method 245 comprises verifying that the media content at the remote data storage system such as, but not limited to, the media asset at the remote data storage portion 150 described with reference to FIG. 1, comprises the media content at the local data storage system such as, but not limited to, the media asset received from the client 120 and stored at the local data storage portion 130. One such method 245 may use the checksum files described above with reference to FIG. 1 to perform this verification. Finally, at 275 of FIG. 2, the method 245 comprises deleting the media content at the local data storage system. For example, and as again described elsewhere herein, upon verifying that the remote data storage portion 150 comprises a media asset such as, but not limited to, a media tape, which comprises the exact content as the media file stored at the local data storage portion 130, the media asset at the local data storage portion 130 may be deleted or otherwise removed. This may comprise deleting or otherwise removing the media content from a tape stored at the local data storage portion 130. The method may further comprise replicating a tape. For example a data tape may be copied to one or more tapes or other data sources. The method may end after step 275.

A method 245 may further comprise sending from a client device 120 a request for the media content and receiving 122 the request at a local data management portion 110, which may also be referred to herein as a local data management system. The request may be forwarded to a remote data storage portion 150, also referred to herein as a remote data storage system. The remote data storage system may comprise one or more media tape storage libraries 155. The content may then be accessed on the one or more media tap storage libraries 155 and provided to the client device 120 from the on the one or more media tap storage libraries 155. For example, the content may be streamed directly to the client device 120. The media content may be located at the remote data storage portion 150 by copying a plurality of media content files to the remote data storage portion 150 from one or more host locations such as, but not limited to, the local data management portion 110.

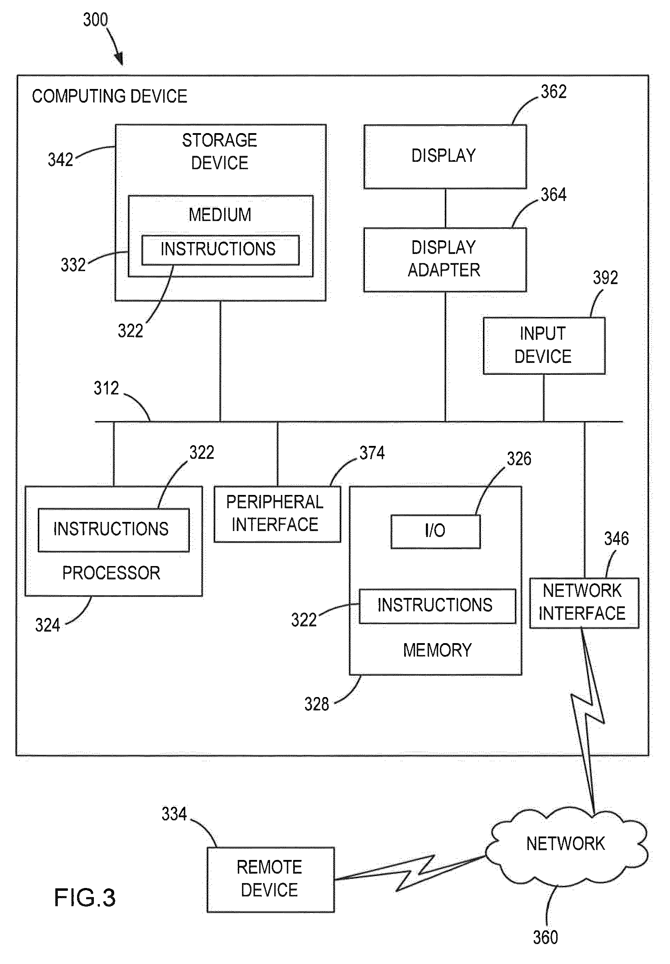

FIG. 3 shows a diagrammatic representation of one embodiment of a machine in the exemplary form of a computing device 300 within which a set of instructions for causing a device to perform any one or more of the aspects and/or methodologies of the present disclosure to be executed. Computing device 300 includes the processor 324, which communicates with the memory 328 and with other components, via the bus 312. Bus 312 may include any of several types of bus structures including, but not limited to, a memory bus, a memory controller, a peripheral bus, a local bus, and any combinations thereof, using any of a variety of bus architectures.

Memory 328 may include various components (e.g., machine readable media) including, but not limited to, a random access memory component (e.g., a static RAM "SRAM", a dynamic RAM "DRAM, etc.), a read only component, and any combinations thereof. In one example, a basic input/output system 326 (BIOS), including basic routines that help to transfer information between elements within computing device 300, such as during start-up, may be stored in memory 328. Memory 328 may also include (e.g., stored on one or more machine-readable media) instructions (e.g., software) 322. The instructions 322 may embody any one or more of the aspects and/or methodologies of the present disclosure. In another example, memory 328 may further include any number of program modules including, but not limited to, an operating system, one or more application programs, other program modules, program data, and any combinations thereof.

Computing device 300 may also include a storage device 342. Examples of a storage device (e.g., storage device 342) include, but are not limited to, a hard disk drive for reading from and/or writing to a hard disk, a magnetic disk drive for reading from and/or writing to a removable magnetic disk, an optical disk drive for reading from and/or writing to an optical media (e.g., a CD, a DVD, etc.), a solid-state memory device, and any combinations thereof. Storage device 342 may be connected to bus 312 by an appropriate interface (not shown).
Example interfaces include, but are not limited to, SCSI, advanced technology attachment (ATA), serial ATA, universal serial bus (USB), IEEE 1394 (FIREWIRE), and any combinations thereof. In one example, storage device 342 may be removably interfaced with computing device 300 (e.g., via an external port connector (not shown)). Particularly, storage device 342 and an associated machine-readable medium 332 may provide nonvolatile and/or volatile storage of machine-readable instructions, data structures, program modules, and/or other data for computing device 300. In one example, instructions 322 may reside, completely or partially, within machine-readable medium 332. In another example, instructions 322 may reside, completely or partially, within processor 324.

Computing device 300 may also include an input device 392. In one example, a user of computing device 300 may enter commands and/or other information into computing device 300 via input device 392. Examples of an input device 392 include, but are not limited to, an alpha- numeric input device (e.g., a keyboard), a pointing device, a joystick, a gamepad, an audio input device (e.g., a microphone, a voice response system, etc.), a cursor control device (e.g., a mouse), a touchpad, an optical scanner, a video capture device (e.g., a still camera, a video camera), touchscreen, and any combinations thereof. Input device 392 may be interfaced to bus 312 via any of a variety of interfaces (not shown) including, but not limited to, a serial interface, a parallel interface, a game port, a USB interface, a FIREWIRE interface, a direct interface to bus 312, and any combinations thereof.

A user may also input commands and/or other information to computing device 300 via storage device 342 (e.g., a removable disk drive, a flash drive, etc.) and/or a network interface device 346 which may comprise the transmitter/receiver. In one embodiment, the transmitter/receiver comprises a wireless transmitter/receiver. A network interface device, such as network interface device 346 may be utilized for connecting computing device 300 to one or more of a variety of networks, such as network 360, and one or more remote devices 334 connected thereto. Examples of a network interface device include, but are not limited to, a network interface card, a modem, and any combination thereof. Examples of a network or network segment include, but are not limited to, a wide area network (e.g., the Internet, an enterprise network), a local area network (e.g., a network associated with an office, a building, a campus or other relatively small geographic space), a telephone network, a direct connection between two computing devices, and any combinations thereof. A network, such as network 360, may employ a wired and/or a wireless mode of communication. In general, any network topology may be used. Information (e.g., data, software, etc.) may be communicated to and/or from computing device 300 via network interface device 346.

Computing device 300 may further include a video display adapter 364 for communicating a displayable image to a display device, such as display device 362. Examples of a display device include, but are not limited to, a liquid crystal display (LCD), a cathode ray tube (CRT), a plasma display, and any combinations thereof. In addition to a display device, a computing device 300 may include one or more other peripheral output devices including, but not limited to, an audio speaker, a printer, and any combinations thereof. Such peripheral output devices may be connected to bus 312 via a peripheral interface 374. Examples of a peripheral interface include, but are not limited to, a serial port, a USB connection, a FIREWIR-E connection, a parallel connection, and any combinations thereof. In one example an audio device may provide audio related to data of computing device 300 (e.g., data representing an indicator related to pollution impact and/or pollution offset attributable to a consumer).

A digitizer (not shown) and an accompanying stylus, if needed, maybe included in order to digitally capture freehand input. A pen digitizer may be separately configured or coextensive with a display area of display device 362. Accordingly, a digitizer may be integrated with display device 362, or may exist as a separate device overlaying or otherwise appended to display device 362.

In one embodiment, the medium 332 may comprise a non-transitory, tangible computer readable storage medium. Furthermore, the instructions 322 may comprise processor readable instructions to perform a method of managing media content. One such method may comprise a method similar to the method 245 seen in FIG. 2. For example, one such method may comprise steps similar to steps 260, 265, 270 and 275. One method of managing media content comprises providing a media tape to a local data storage system similar to the local data storage portion 130 seen in Fig. 1B, where the media tape comprises media content. The media content from the media tape may also be sent to a remote data storage system similar to the remote data storage portion 150 seen in FIG. 1C. At this point in time, the method may further comprise verifying that the media content at the remote data storage system comprises the media content at the local data storage system. For example, the check sum verification process described above may be employed to provide such a feature. Upon verifying the media content on the remote system is the same media content on the local system, the method comprises removing the media content at the local data storage system.

One method may also comprise sending a request from a client device such as, but not limited to the client device 120 seen in FIG. 1B, to receive the media content. Furthermore, the request may be received at a local data management system such as, but not limited to the location data management portion 110 seen in FIG. 1B. The request may then be sent to the remote data storage system which may comprise one or more media tape storage libraries. Furthermore, the method may comprise accessing the content on the one or more media tape storage libraries and providing the media content to the client device from the on the one or more media tape storage libraries. For example, the media content may be restored as a digital file and the digital file may be sent to the client device 120. One embodiment may comprise providing a plurality of media tapes to a first local data storage system from a plurality of client locations and managing the content between multiple remote data storage systems, wherein each of the multiple remote data storage system is located at a separate location.

In conclusion, embodiments of the present invention are related to providing and using time-based metadata in digital video files. Those skilled in the art can readily recognize that numerous variations and substitutions may be made in the invention, its use and its configuration to achieve substantially the same results as achieved by the embodiments described herein.

Accordingly, there is no intention to limit the invention to the disclosed exemplary forms. Many variations, modifications and alternative constructions fall within the scope and spirit of the disclosed invention as expressed in the claims.

## Claims

1. A media data storage system comprising,
a data management portion comprising instructions associated with an intake, modification, transfer, and providing of media information;
a local data storage portion comprising one or more first media data tape libraries adapted to receive the media information;
a remote data storage portion comprising one or more second media data tape libraries adapted to receive the media information; and wherein,
the data management portion is adapted to instruct the local data storage portion to remove at least a portion of the media information from the one or more first media tape libraries upon verifying that the remote data storage portion comprises the at least a portion of the media information.

2. The media data storage system of claim 1 wherein, verifying that the remote data storage portion comprises the at least a portion of the media information comprises,
receiving a first file comprising checksum information; producing a second file comprising checksum information; and comparing the second file to the first file.

3. The media data storage system of claim 2 wherein, receiving a first file comprising checksum information comprises receiving an xml file at the remote data storage portion.

4. The media data storage system of claim 1 wherein, the local data storage portion comprises a plurality of one or more first media data tape libraries, each of the plurality of one or more first media data tape libraries being located at a different location.

5. The media storage system of claim 1 further comprising, a client adapted to request access to the at least a portion of the media information; and wherein, the at least a portion of the media information is sent to the client from the one or more second media data tape libraries.

6. The media storage system of claim 5 wherein,
the client request comprises a portion of a playlist; and
the at least a portion of the media information is sent to the client from the one or more second media data tape libraries comprises substantially live streaming the at least a portion of the media information.

7. The media storage system of claim 1 wherein, the data management portion comprises a request manager, the request manager adapted to direct requests for the at least a portion of the media information to the remote data storage portion.

8. A method of managing media content comprising,
providing a media tape to a local data storage system, wherein the media tape comprises media content;
copying the media content to a remote data storage system;
verifying that the media content at the remote data storage system comprises the media content at the local data storage system ; and
deleting the media content at the local data storage system.

9. The method of claim 8 wherein, providing the media tape comprises creating a data tape from a digital file.

10. The method of claim 9 further comprising, replicating the data tape.

11. The method of claim 8 wherein, verifying the media content at the remote data storage system comprises the media content at the local data storage system comprises,
comparing a first file comprising checksum information to a second file comprising checksum information; and
determining whether there are any differences between the first file and the second file.

12. The method of claim 11 wherein, the first file comprising checksum information comprises an xml file.

13. The method of claim 8, further comprising,
requesting the media content from a client device; receiving the request at a local data management system;
forwarding the request to a remote data storage system, the remote data storage system comprising one or more media tape storage libraries;
accessing the content on the one or more media tape storage libraries; and providing the media content to a client device from the on the one or more media
tape storage libraries.

14. The method of claim 8 wherein, copying the media content to a remote data storage system comprises copying a plurality of media content files to the remote data storage system from one or more host locations.

15. A non-transitory, tangible computer readable storage medium, encoded with processor readable instructions to perform a method of managing media content comprising,
providing a media tape to a local data storage system, wherein the media tape comprises media content;
sending the media content to a remote data storage system;
verifying that the media content at the remote data storage system comprises the media content at the local data storage system; and
removing the media content at the local data storage system.

16. The non-transitory, tangible computer readable storage medium of claim 15 wherein, the method step of verifying that the media content at the remote data storage system comprises the media content at the local data storage system comprises, comparing a first file comprising checksum information to a second file comprising checksum information; and determining whether there are any differences between the first file and the second file, or further comprising sending a request from a client device to receive the media content; receiving the request at a local data management system; forwarding the request to a remote data storage system, the remote data storage system comprising one or more media tape storage libraries;
accessing the content on the one or more media tape storage libraries; and providing the media content to a client device from the on the one or more media tape storage libraries, or wherein providing a media tape to a local data storage system comprises, providing a plurality of media tapes to a first local data storage system from a plurality of client locations, wherein providing the media content to a client device from the on the one or more media tape storage libraries preferably comprises, restoring the media content to a digital file; and sending the digital file to the client, and preferably further comprising, managing the content between multiple remote data storage systems, wherein each of the multiple remote data storage system is located at a separate location.
